# EUROPEAN PATENT SPECIFICATION

(11) **EP 3 575 343 B1**
(45) Date of publication and mention of the grant of the patent: **09.09.2026**
(21) Application number: 18822585.8
(22) Date of filing: 02.07.2018
(51) Int. Cl.: C08G 73/10, C08G 73/14, C08L 79/08, C08J 5/18

(54) **POLYIMIDE-BASED COPOLYMER AND POLYIMIDE-BASED FILM COMPRISING THE SAME**
POLYIMIDBASIERTES COPOLYMER UND POLYIMIDBASIERTER FILM DAMIT
COPOLYMÈRE À BASE DE POLYIMIDE, ET FILM À BASE DE POLYIMIDE LE COMPRENANT

(30) Priority: 30.06.2017 KR 20170083260; 29.06.2018 KR 20180075396
(43) Date of publication of application: 04.12.2019
(73) Proprietor: LG Chem, Ltd., Seoul 07336 (KR)
(72) Inventor: CHOI, Sung Yeol, Daejeon 34122 (KR); EOM, Young Sik, Daejeon 34122 (KR); KIM, Sang Gon, Daejeon 34122 (KR); CHOI, Hyung Sam, Daejeon 34122 (KR)
(74) Representative: Goddar, Heinz J.
(86) International application number: PCT/KR2018/007480
(87) International publication number: WO 2019/004802

(56) References cited:
- EP-A1- 0 315 025
- WO-A1-2016/052323
- JP-A- 2015 108 053
- KR-A- 20010 049 649
- KR-A- 20130 029 129
- KR-A- 20160 040 184
- US-A- 4 504 632

## Description

### FIELD

The present disclosure relates to a polyimide-based copolymer and a polyimide-based film including the same.

### BACKGROUND

An aromatic polyimide resin is a polymer mostly having an amorphous structure, and exhibits excellent heat resistance, chemical resistance, electrical properties, and dimensional stability due to its rigid chain structure. The polyimide resin is widely used as a material for electrical/electronics, aerospace, aviation, and automobile fields.

However, a wholly aromatic polyimide resin is generally insoluble and has a high softening temperature in spite of excellent heat resistance, so that moldability and processability are deteriorated, and it is difficult to use conventional processing equipment for resin processing.

Therefore, various attempts have been made to improve the moldability of the polyimide resin while minimizing deterioration of excellent heat resistance and mechanical properties at high temperatures. For example, a method of introducing -O-, -S-, or the like, and a method of introducing a meta-substituent or a bulky molecular structure to increase flexibility of chains in the polyimide resin, have been proposed. With the polyimide resin according to the above proposals, it is difficult to exhibit sufficient heat resistance due to a bending structure or an aliphatic cyclic compound, and a film prepared using the same still has a limit of poor mechanical properties.

In addition, the polyimide resin is a material having high water absorbency due to amide bonds, and therefore, when used in engineering plastics, sufficient mechanical properties cannot be secured, so that there are many limitations on its use. Although the absorbency rate of the polyimide film has been controlled by a conventional post-cure method in order to solve the above limitations, there is a possibility of the film being deformed by the additional process, and economic efficiency may be reduced because of an increase in cost.

EP 0 315 025 A1 discloses an amide imide copolymer.

KR 20010049649 A discloses a polyimide.

### SUMMARY

According to the present disclosure, a polyimide-based copolymer exhibiting low absorbency while having excellent heat resistance and mechanical properties is provided.

In addition, a polyimide-based film including a polyimide-based copolymer is provided.

According to the present disclosure, a polyimide-based copolymer including a first repeating unit represented by Chemical Formula 1, a second repeating unit represented by Chemical Formula 2, and a third repeating unit represented by Chemical Formula 3, wherein a mole ratio of the first repeating unit to the second repeating unit is 1:0.5 to 2, is provided: 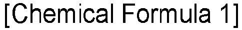 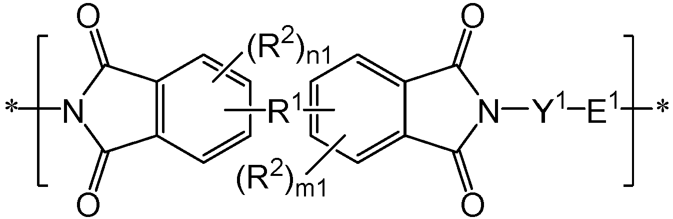 wherein, in Chemical Formula 1,
each R¹ is the same as or different from each other in each repeating unit, and each independently includes a C6 to C30 divalent aromatic organic group containing at least one -O- linking group, and the aromatic organic group exists alone, or two or more aromatic organic groups are bonded to each other to form a condensed ring, or two or more aromatic organic groups are linked by a single bond, a fluorenylene group, -O-, -S-, -C(=O)-, -CH(OH)-, -S(=O)₂-, - Si(CH₃)₂-, -(CH₂)ₚ- (wherein 1≤p≤10), -(CF₂)_{q}- (wherein 1≤q≤10), -C(CH₃)₂-, - C(CF₃)₂-, or -C(=O)NH-;
each R² is the same as or different from each other in each repeating unit, and each is independently -H, -F, -Cl, -Br, -I, -CF₃, -CCl₃, -CBr₃, -Cl₃, -NO₂, -CN, -COCH₃, -CO₂C₂H₅, a silyl group containing three C1 to C10 aliphatic organic groups, a C1 to C10 aliphatic organic group, or a C6 to C20 aromatic organic group;
n1 and m1 are each independently an integer of 0 to 3;
each Y¹ is the same as or different from each other in each repeating unit, and each is independently a C3 to C10 aliphatic organic group; and
each E¹ is independently a single bond or -NH-, 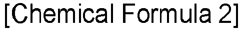 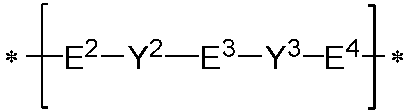 wherein, in Chemical Formula 2,
   each Y² is the same as or different from each other in each repeating unit, and each is independently a C6 to C30 divalent aromatic organic group containing at least one trifluoromethyl group (-CF₃), and the aromatic organic group exists alone, or two or more aromatic organic groups are bonded to each other to form a condensed ring, or two or more aromatic organic groups are linked by a single bond, a fluorenylene group, -O-, -S-, -C(=O)-, -CH(OH)-, - S(=O)₂-, -Si(CH₃)₂-, -(CH₂)ₚ- (wherein 1≤p≤10), -(CF₂)_{q}- (wherein 1≤q≤10), - C(CH₃)₂-, -C(CF₃)₂-, or -C(=O)NH-;
   E², E³, and E⁴ are independently a single bond or -NH-; and
   each Y³ is the same as or different from each other in each repeating unit, and each is independently a divalent linking group derived from at least one compound selected from the group consisting of diacyl halide, dicarboxylic acid, and dicarboxylate in the form of -C(=O)-A-C(=O)-,
   wherein A of Y³ is a C6 to C20 divalent aromatic organic group, a C4 to C20 divalent heteroaromatic organic group, or a C6 to C20 divalent alicyclic organic group, and two of -C(=O)- are bonded at a para position with respect to A, 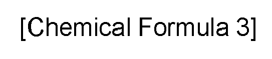 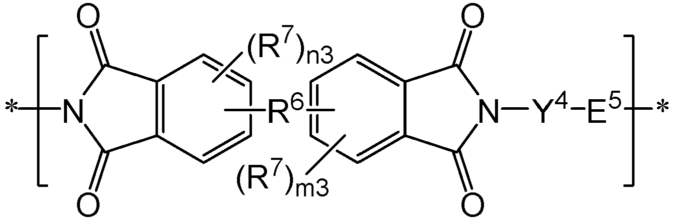 wherein, in Chemical Formula 3,
      each R⁶ is the same as or different from each other in each repeating unit, and each independently comprises a C6 to C30 divalent aromatic organic group containing at least one -O- linking group, and the aromatic organic group exists alone, or two or more aromatic organic groups are bonded to each other to form a condensed ring, or two or more aromatic organic groups are linked by a single bond, a fluorenylene group, -O-, -S-, -C(=O)-, -CH(OH)-, -S(=O)₂-, - Si(CH₃)₂-, -(CH₂)ₚ- (wherein 1≤p≤10), -(CF₂)_{q}- (wherein 1≤q≤10), -C(CH₃)₂-, - C(CF₃)₂-, or -C(=O)NH-;
      each R⁷ is the same as or different from each other in each repeating unit, and each is independently -H, -F, -Cl, -Br, -I, -CF₃, -CCl₃, -CBr₃, -Cl₃, -NO₂, -CN, -COCH₃, -CO₂C₂H₅, a silyl group containing three C1 to C10 aliphatic organic groups, a C1 to C10 aliphatic organic group, or a C6 to C20 aromatic organic group;
      n3 and m3 are each independently an integer of 0 to 3;
      each Y⁴ is the same as or different from each other in each repeating unit, and each is independently a C6 to C30 divalent aromatic organic group containing at least one trifluoromethyl group (-CF₃), and the aromatic organic group exists alone, or two or more aromatic organic groups are bonded to each other to form a condensed ring, or two or more aromatic organic groups are linked by a single bond, a fluorenylene group, -O-, -S-, -C(=O)-, -CH(OH)-, - S(=O)₂-, -Si(CH₃)₂-, -(CH₂)ₚ- (wherein 1≤p≤10), -(CF₂)_{q}- (wherein 1≤q≤10), - C(CH₃)₂-, -C(CF₃)₂-, or -C(=O)NH-; and
      each E⁵ is independently a single bond or -NH-.

The present disclosure also provides a polyimide-based film including the polyimide-based copolymer.

Further embodiments are disclosed in the dependent claims.

Hereinafter, the polyimide-based copolymer and the polyimide-based film including the same, according to the present disclosure, will be described in more detail.

Singular expressions of the present disclosure may include plural expressions unless it is differently expressed contextually.

The terms "include", "comprise", and the like of the present disclosure are used to specify certain features, regions, integers, steps, operations, elements, and/or components, and these do not exclude the existence or the addition of certain other features, regions, integers, steps, operations, elements, and/or components.

Also, the terms including ordinal numbers such as "first" and "second" are used to distinguish one component from another, and the components are not limited by the ordinal number. For example, within the scope of the present invention, the first component may also be referred to as a second component, and similarly, the second component may be referred to as a first component.

### I. Polyimide-based copolymer

According to one embodiment of the present disclosure, a polyimide-based copolymer including a first repeating unit represented by Chemical Formula 1, a second repeating unit represented by Chemical Formula 2, and a third repeating unit represented by Chemical Formula 3, is provided.

As a result of studies by the present inventors, it was confirmed that a polyimide-based copolymer in which an aliphatic diamine monomer and an aromatic dianhydride monomer containing at least one ether (-O-) linking group in the molecule are copolymerized can have both a low glass transition temperature and moldability within a range not affecting thermal stability. It was also found that it is possible to ameliorate a disadvantage of the polyimide-based resin, which is high absorbency, by using an aromatic diamine monomer containing at least one trifluoromethyl group (-CF₃) in the polymerization.

### (i) First repeating unit

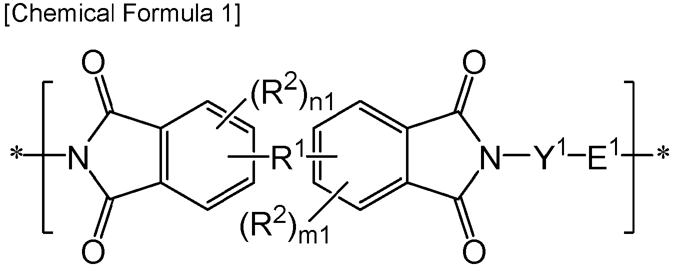

In the first repeating unit represented by Chemical Formula 1,
each R¹ is the same as or different from each other in each repeating unit, and each may independently include a C6 to C30 divalent aromatic organic group containing at least one -O- linking group; and the aromatic organic group may exist alone, or two or more aromatic organic groups may be bonded to each other to form a condensed ring, or two or more aromatic organic groups may be linked by a single bond, a fluorenylene group, -O-, -S-, -C(=O)-, - CH(OH)-, -S(=O)₂-, -Si(CH₃)₂-, -(CH₂)ₚ- (wherein 1≤p≤10), -(CF₂)_{q}- (wherein 1≤q≤10), -C(CH₃)₂-, -C(CF₃)₂-, or -C(=O)NH-.

Herein, the single bond means a case that R¹ in Chemical Formula 1 is a chemical bond which simply links the groups on both sides.

Each R² is the same as or different from each other in each repeating unit, and each may independently be -H, -F, -Cl, -Br, -I, -CF₃, -CCl₃, -CBr₃, -Cl₃, -NO₂, -CN, -COCH₃, -CO₂C₂H₅, a silyl group containing three C1 to C10 aliphatic organic groups, a C1 to C10 aliphatic organic group, or a C6 to C20 aromatic organic group.

n1 and m1 may each independently be an integer of 0 to 3.

Each Y¹ is the same as or different from each other in each repeating unit, and each may independently be a C3 to C10 aliphatic organic group.

Each E¹ may independently be a single bond or -NH-. Herein, the single bond means a case that E¹ in Chemical Formula 1 is a chemical bond which simply links the groups on both sides.

Preferably, the first repeating unit may include a repeating unit represented by Chemical Formula 1-1: 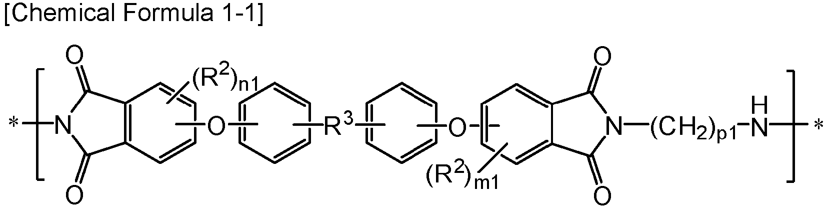 wherein, in Chemical Formula 1-1,
R², n1, and m1 are as defined in Chemical Formula 1.
Each R³ is the same as or different from each other in each repeating unit, and each may independently be a single bond, a fluorenylene group, -O-, - S-, -C(=O)-, -CH(OH)-, -S(=O)₂-, -Si(CH₃)₂-, -(CH₂)ₚ- (wherein 1≤p≤10), -(CF₂)_{q}-(wherein 1≤q≤10), -C(CH₃)₂-, -C(CF₃)₂-, or -C(=O)NH-. Preferably, it may be - C(CH₃)₂-.

In addition, p1 may be an integer of 3 to 10.

### (ii) Second repeating unit

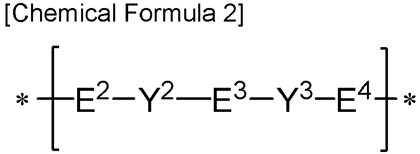

In Chemical Formula 2,
each Y² is the same as or different from each other in each repeating unit, and each may independently be a C6 to C30 divalent aromatic organic group containing at least one trifluoromethyl group (-CF₃); and the aromatic organic group may exist alone, or two or more aromatic organic groups may be bonded to each other to form a condensed ring, or two or more aromatic organic groups may be linked by a single bond, a fluorenylene group, -O-, -S-, - C(=O)-, -CH(OH)-, -S(=O)₂-, -Si(CH₃)₂-, -(CH₂)ₚ- (wherein 1≤p≤10), -(CF₂)_{q}-(wherein 1≤q≤10), -C(CH₃)₂-, -C(CF₃)₂-, or -C(=O)NH-.
E², E³, and E⁴ may independently be a single bond or -NH-. Herein, the single bond means a case that E², E³, and E⁴ are each a chemical bond which simply links the groups on both sides.

Each Y³ is the same as or different from each other in each repeating unit, and each may independently be a divalent linking group derived from at least one compound selected from the group consisting of diacyl halide, dicarboxylic acid, and dicarboxylate in the form of -C(=O)-A-C(=O)-.

A of Y³ may be a C6 to C20 divalent aromatic organic group, a C4 to C20 divalent heteroaromatic organic group, or a C6 to C20 divalent alicyclic organic group, and two of -C(=O)- may be bonded at para position with respect to A.

Preferably, the second repeating unit may include a repeating unit represented by Chemical Formula 2-1.

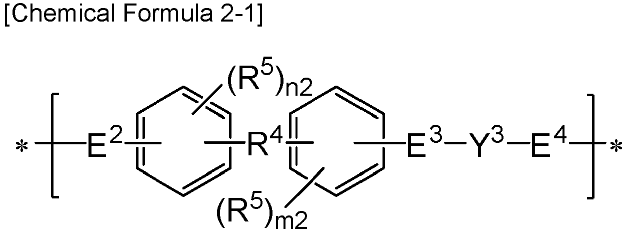

In Chemical Formula 2-1,
each R⁴ is the same as or different from each other in each repeating unit, and each may independently be a single bond, a fluorenylene group, -O-, - S-, -C(=O)-, -CH(OH)-, -S(=O)₂-, -Si(CH₃)₂-, -(CH₂)ₚ- (wherein 1≤p≤10), -(CF₂)_{q}-(wherein 1≤q≤10), -C(CH₃)₂-, -C(CF₃)₂-, or -C(=O)NH-. Preferably, it may be a single bond. Herein, the single bond means a case that E⁴, E⁵, and E⁶ are each a chemical bond which simply links the groups on both sides.

Each R⁵ may independently be -H, -F, -Cl, -Br, -I, -CF₃, -CCl₃, -CBr₃, - Cl₃, -NO₂, -CN, -COCH₃, -CO₂C₂H₅, a silyl group containing three C1 to C10 aliphatic organic groups, a C1 to C10 aliphatic organic group, or a C6 to C20 aromatic organic group. Preferably, it may be -H.

n2 and m2 may independently be an integer of 0 to 5.

E², E³, and E⁴ may independently be a single bond or -NH-.

Each Y³ is the same as or different from each other in each repeating unit, and each may independently be selected from the group consisting of the following structural formulae.

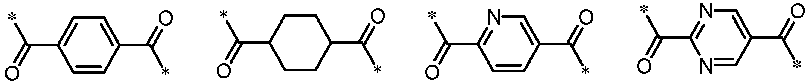

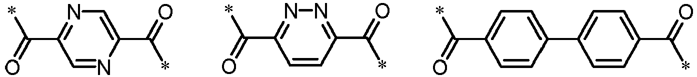

Specifically, Y³ may independently be a divalent linking group derived from at least one compound selected from the group consisting of terephthaloyl chloride (TPC), terephthalic acid, cyclohexane-1,4-dicarbonyl chloride, cyclohexane-1,4-dicarboxylic acid, pyridine-2,5-dicarbonyl chloride, pyridine-2,5-dicarboxylic acid, pyrimidine-2,5-dicarbonyl chloride, pyrimidine-2,5-dicarboxylic acid, 4,4'-biphenyldicarbonyl chloride (BPC), and 4,4'-biphenyldicarboxylic acid.

The polyimide-based copolymer has a mole ratio of the first repeating unit to the second repeating unit of 1:0.5 to 2, preferably 1:0.8 to 1.5. Excellent thermal stability and low absorbency can be simultaneously realized within the above-mentioned mole ratio range.

Specifically, the structure of the ether (-O-) linking group and the structure of the aliphatic organic group introduced into the first repeating unit can improve flexibility in the molecule, and thus excellent moldability can be realized while maintaining thermal stability of the copolymer in an appropriate range. In addition, the trifluoromethyl group (-CF₃) introduced into the second repeating unit can improve the problem of the polyimide resin having high absorbency.

Therefore, when the mole of the first repeating unit is too low beyond the above range, the glass transition temperature rises and processability of the polymer may be deteriorated. Also, when the mole of the second repeating unit is too low beyond the above range, mechanical properties of the polymer, in particular, strength, may be deteriorated.

The polyimide-based copolymer further includes a third repeating unit represented by Chemical Formula 3, in addition to the first repeating unit and the second repeating unit: 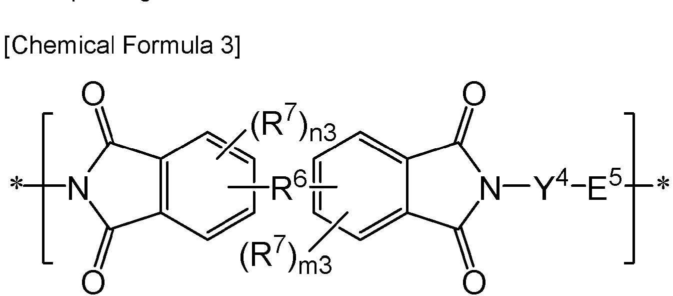 wherein, in Chemical Formula 3,
each R⁶ is the same as or different from each other in each repeating unit, and each may independently include a C6 to C30 divalent aromatic organic group containing at least one -O- linking group; and the aromatic organic group may exist alone, or two or more aromatic organic groups may be bonded to each other to form a condensed ring, or two or more aromatic organic groups may be linked by a single bond, a fluorenylene group, -O-, -S-, -C(=O)-, - CH(OH)-, -S(=O)₂-, -Si(CH₃)₂-, -(CH₂)ₚ- (wherein 1≤p≤10), -(CF₂)_{q}- (wherein 1≤q≤10), -C(CH₃)₂-, -C(CF₃)₂-, or -C(=O)NH-.

Each R⁷ is the same as or different from each other in each repeating unit, and each may independently be -H, -F, -Cl, -Br, -I, -CF₃, -CCl₃, -CBr₃, -Cl₃, -NO₂, -CN, -COCH₃, -CO₂C₂H₅, a silyl group containing three C1 to C10 aliphatic organic groups, a C1 to C10 aliphatic organic group, or a C6 to C20 aromatic organic group.

n3 and m3 may each independently be an integer of 0 to 3.

Each Y⁴ is the same as or different from each other in each repeating unit, and each may independently be a C6 to C30 divalent aromatic organic group containing at least one trifluoromethyl group (-CF₃); and the aromatic organic group may exist alone, or two or more aromatic organic groups may be bonded to each other to form a condensed ring, or two or more aromatic organic groups may be linked by a single bond, a fluorenylene group, -O-, -S-, - C(=O)-, -CH(OH)-, -S(=O)₂-, -Si(CH₃)₂-, -(CH₂)ₚ- (wherein 1≤p≤10), -(CF₂)_{q}-(wherein 1≤q≤10), -C(CH₃)₂-, -C(CF₃)₂-, or -C(=O)NH-.

Each E⁵ may independently be a single bond or -NH-.

Preferably, the third repeating unit may include a repeating unit represented by Chemical Formula 3-1.

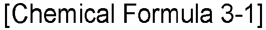

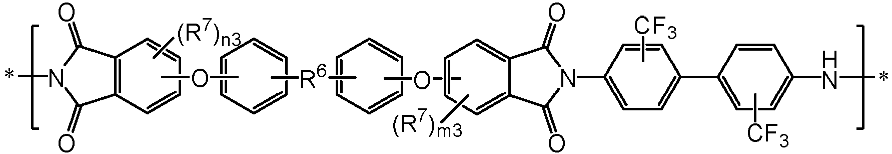

In Chemical Formula 3-1,
R⁷, n3, and m3 are as defined in Chemical Formula 3, and
each R⁶ is the same as or different from each other in each repeating unit, and each may independently be a single bond, a fluorenylene group, -O-, - S-, -C(=O)-, -CH(OH)-, -S(=O)₂-, -Si(CH₃)₂-, -(CH₂)ₚ- (wherein 1≤p≤10), -(CF₂)_{q}-(wherein 1≤q≤10), -C(CH₃)₂-, -C(CF₃)₂-, or -C(=O)NH-.

Further, a mole ratio of the first repeating unit to the second repeating unit to the third repeating unit may be 1:0.5 to 2:1 to 3, and preferably 1:0.8 to 1.5:1.5 to 2.5.

The polyimide-based copolymer including all of the first, second, and third repeating units can further improve the moldability-improving effect according to the first repeating unit and the absorbency-reducing effect according to the second repeating unit.

In addition, the polyimide-based copolymer may have a weight average molecular weight of 90,000 to 150,000 g/mol, and preferably 10,000 to 130,000 g/mol.

The polyimide-based copolymer is prepared by a method including the steps of: mixing a compound forming the first repeating unit in an appropriate solvent to initiate a reaction; adding a compound forming the second repeating unit to the reaction mixture and reacting; adding a compound forming the third repeating unit to the reaction mixture and reacting; and inducing a chemical imidization reaction by adding a compound such as acetic anhydride or pyridine to the reaction mixture or inducing a thermal imidization reaction of amic acids by azeotropic distillation.

The polyimide-based copolymer may be prepared by low-temperature solution polymerization, interfacial polymerization, melt polymerization, solid phase polymerization, or the like.

### II. Polyimide-based film

According to another embodiment, a polyimide-based film including the polyimide-based copolymer is provided.

As described above, according to a result of further studies by the present inventors, it was confirmed that introduction of an aliphatic organic group having excellent flexibility and an ether (-O-) linking group can realize a low glass transition temperature within a range not affecting thermal stability, thereby improving moldability of the film. Also, it was confirmed that it is possible to improve the disadvantage of the polyimide-based resin, which is high absorbency, by using a trifluoromethyl group (-CF₃) in the molecule.

As a result, the polyimide-based film including the polyimide-based copolymer can be used as a material for various molded products requiring both excellent moldability and mechanical properties. In particular, since the polyimide-based film according to the present disclosure can exhibit low absorbency, it may be easily applied to engineering films such as for automobile parts and industrial parts.

In one embodiment of the present disclosure, the polyimide-based film may have a water absorbency rate of 0.5 to 2.0 %, preferably 1.0 to 1.5 %, measured by a change in weight after storage for 15 hours±0.5 hours under the conditions of RH 85 % ± 2 % and 85 °C ± 2 °C . By having a water absorbency rate within the above range, it is easily applied to engineering films.

The water absorbency rate is obtained by measuring a change in weight over time at room temperature (25 °C ± 1 °C ) after allowing to stand under the above-mentioned conditions in a thermo-hygrostat.

In one embodiment of the present disclosure, the polyimide-based film may have a glass transition temperature (Tg) of 180 °C to 220 °C , preferably 190 °C to 210 °C. By having the glass transition temperature within the above range, it has excellent moldability and it is easily applied to engineering films.

The polyimide-based film may be prepared by a conventional method such as a dry method or a wet method using the polyimide-based copolymer. For example, the polyimide-based film may be obtained by coating a solution containing the copolymer on an arbitrary support to form a film, and drying the film by evaporating the solvent from the film. If necessary, stretching and heat treatment for the polyimide-based film may be carried out.

The polyimide-based copolymer according to the present disclosure makes it possible to provide a polyimide-based film which is excellent in both thermal stability and moldability, and is capable of exhibiting low absorbency.

### BRIEF DESCRIPTION OF THE DRAWINGS

FIG. 1 shows H-NMR data of the polyimide-based copolymer according to Preparation Example 1.
FIG. 2 is a graph showing a glass transition temperature of the polyimide-based copolymer according to Example 1 and Comparative Example 1.
FIG. 3 is a graph showing a water absorbency rate of the polyimide-based copolymer according to Example 1 and Comparative Example 1.

### DETAILED DESCRIPTION

Hereinafter, preferred examples are provided for better understanding. However, these examples are for illustrative purposes only, and the invention is not intended to be limited by these examples.

### [Preparation Examples] - Preparation of a polyimide-based copolymer

### Preparation Example 1

6.766 g (2.113 eq., 0.02113 mol) of 2,2'-bis(trifluoromethyl)benzidine (TMFB), 15.562g (2.99 eq., 0.0299 mol) of 4,4'-bisphenol dianhydride (BPADA), and 150 ml of N-methylpyrrolidone (NMP) were added to a 500 mL round flask equipped with a Dean-Stark apparatus and a condenser, and the mixture was stirred at room temperature. Thereafter, 1.042 g (0.897 eq., 0.00897 mol) of hexamethylenediamine (HMDA) was dissolved in 16 ml of N-methylpyrrolidone (NMP), followed by slow dripping into the flask. After the addition of hexamethylene diamine (HMDA), the reaction mixture was stirred at room temperature for 4 hours under a nitrogen atmosphere to proceed with the reaction.

After the reaction, a polyamic acid polymer was formed. Then, the reaction mixture was mixed with 3.170 g (0.99 eq., 0.0099 mol) of 2,2'-bis(trifluoromethyl) benzidine, 2.051 g (1.01 eq., 0.010 mol) of terephthaloyl dichloride (TPC) and 36 ml of additional N-methyl pyrrolidone (NMP), followed by stirring in an oil bath at 40 °C for 4 hours to synthesize an amide block polymer.

After completion of the reaction, 102 ml of chlorobenzene was added thereto, the mixture was heated to 190 °C , and an imidization reaction of amic acids was carried out by azeotropic distillation while stirring for about 15 hours.

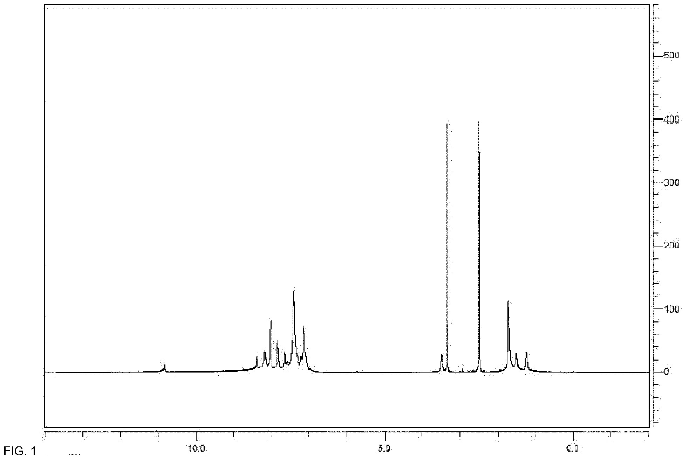

After completion of the reaction, the reaction mixture was precipitated in water and ethanol (1:1 (v/v)) to obtain a polyimide-based block copolymer containing the following first repeating unit, second repeating unit, and third repeating unit in a mole ratio of about 1:1.1:2.2 (weight average molecular weight: about 130,000 g/mol). Specific **NMR** data are shown in FIG. 1.

### [First repeating unit]

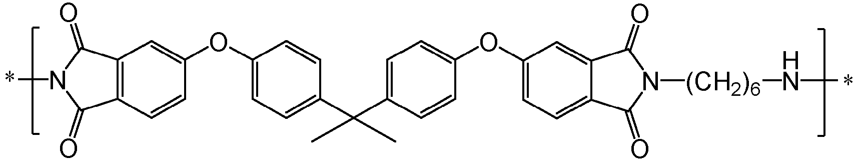

### [Second repeating unit]

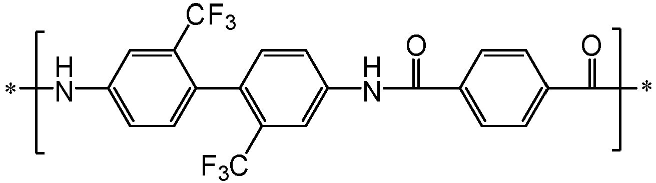

### [Third repeating unit]

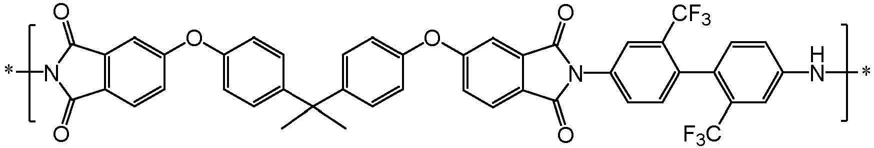

1H NMR(DMSO-d6, TMS as standard material) δ(ppm): 10.83(s), 8.38(s), 8.17(s) 8.02(s), 7.62(s), 7.58(m), 7.40(m), 7.32(m), 7.21(s), 7.14(m), 6.94(m), 3.48(s), 1.73(d), 1.51(s), 1.23(s)

### Comparative Preparation Example 1

A polyimide-based polymer containing the following repeating units was used. 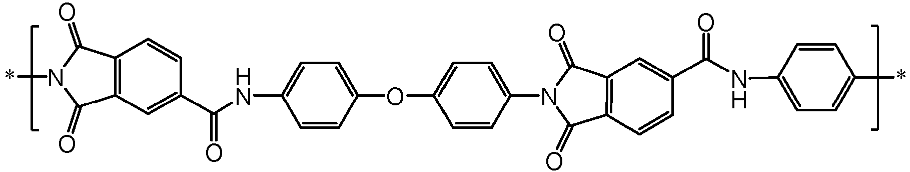 Manufacturer: Solvay, product name: Torlon, weight average molecular weight: about 139,000 g/mol

### Comparative Preparation Example 2: A case of not containing an aliphatic organic group

12.530 g (3.01 eq., 0.03913 mol) of 2,2'-bis(trifluoromethyl)benzidine (TMFB); 20.231 g (2.99 eq., 0.0388 mol) of 4,4'-bisphenol dianhydride (BPADA) and 230 ml of N-methylpyrrolidone (NMP) were added to a 500 mL round flask equipped with a Dean-Stark apparatus and a condenser. The reaction mixture was stirred in an oil bath at 40 °C for 4 hours under a nitrogen atmosphere to proceed with the reaction.

After the reaction, a polyamic acid polymer was formed. Then, the reaction mixture was mixed with 4.121 g (0.99 eq., 0.01287 mol) of 2,2'-bis(trifluoromethyl) benzidine (TMFB), 2.666 g (1.01 eq., 0.0131 mol) of terephthaloyl dichloride (TPC), and 48 ml of additional N-methyl pyrrolidone (NMP), followed by stirring in an oil bath at 40 °C for 4 hours to synthesize an amide block polymer.

After completion of the reaction, 140 ml of chlorobenzene was added thereto, the mixture was heated to 190 °C , and an imidization reaction of amic acids was carried out by azeotropic distillation while stirring for about 15 hours.

After completion of the reaction, the reaction mixture was precipitated in water and ethanol (1:1 (v/v)) to obtain a polyimide-based block copolymer containing an imide block and an amide block in a mole ratio of about 3:1 (weight average molecular weight: about 150,000 g/mol).

### [First repeating unit]

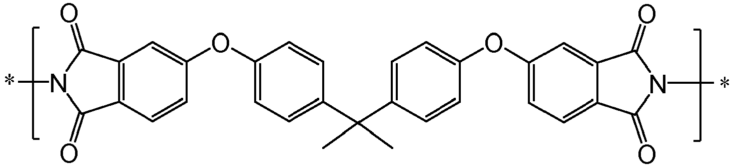

### [Second repeating unit]

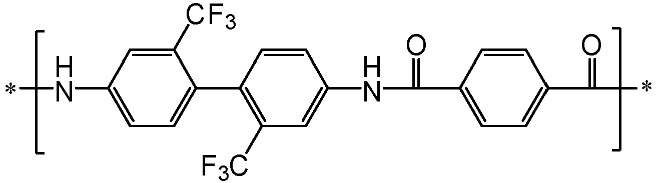

### Comparative Preparation Example 3

8.796 g (2.113 eq., 0.02746 mol) of 2,2'-bis(trifluoromethyl)benzidine (TMFB), 17.267 g (2.99 eq., 0.0387 mol) of 4,4'-(hexafluoroisopropylidene)diphthalic anhydride (6FDA), and 180 ml of N-methylpyrrolidone (NMP) were added to a 500 mL round flask equipped with a Dean-Stark apparatus and a condenser, and the mixture was stirred at room temperature. Thereafter, 1.355 g (0.897 eq., 0.01166 mol) of hexamethylenediamine (HMDA) was dissolved in 20 ml of N-methylpyrrolidone (NMP), followed by slow dripping into the flask. After the addition of hexamethylene diamine (HMDA), the reaction mixture was stirred in an oil bath at 40°C for 4 hours under a nitrogen atmosphere to proceed with the reaction.

After the reaction, a polyamic acid polymer was formed. Then, the reaction mixture was mixed with 3.170 g (0.99 eq., 0.0099 mol) of 2,2'-bis(trifluoromethyl) benzidine, 2.051 g (1.01 eq., 0.010 mol) of terephthaloyl dichloride (TPC), and 36 ml of additional N-methyl pyrrolidone (NMP), followed by stirring in an oil bath at 40 °C for 4 hours to synthesize an amide block polymer.

After completion of the reaction, 102 ml of chlorobenzene was added thereto, the mixture was heated to 190 °C , and an imidization reaction of amic acids was carried out by azeotropic distillation while stirring for about 15 hours.

After completion of the reaction, the reaction mixture was precipitated in water and ethanol (1:1 (v/v)) to obtain a polyimide-based block copolymer containing an imide block and an amide block in a mole ratio of about 3:1 (weight average molecular weight: about 140,000 g/mol).

### [First repeating unit]

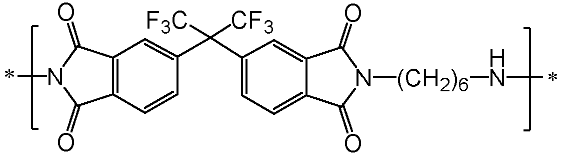

### [Second repeating unit]

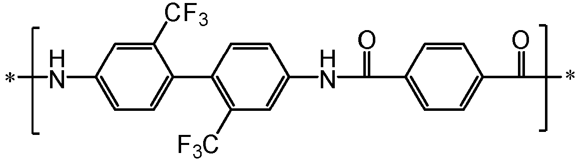

### [Third repeating unit]

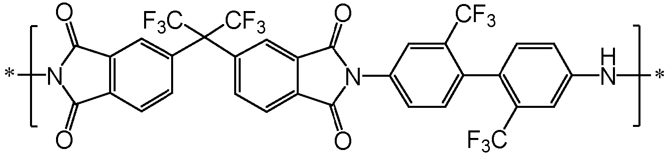

### Example 1

The polyimide-based copolymer obtained in Preparation Example 1 was dissolved in dimethylacetamide to prepare a polymer solution of about 20 (w/V). The polymer solution was poured on a glass plate, the thickness of the polymer solution was uniformly adjusted using a film applicator, and it was dried in a vacuum oven at 20 °C for 12 hours or more to obtain a polyimide-based film having a thickness of 20 to 30 µm.

### Comparative Examples 1 to 3

A film was obtained in the same manner as in Example 1, except that the polyimide-based copolymers obtained in Comparative Preparation Examples 1, 2, and 3 were used in place of the copolymer obtained in Preparation Example 1.

### Experimental Example 1

The following properties were evaluated for the films of Example 1 and Comparative Examples 1 to 3 by the following methods, and the results are shown in Table 1.

### 1) Evaluation of water absorbency rate (%)

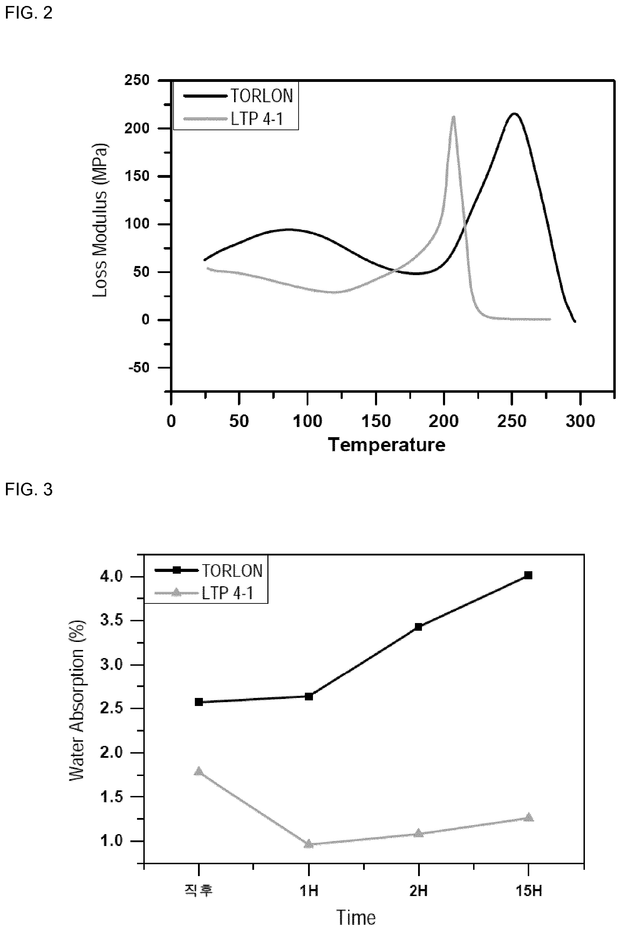

The polyimide-based film was stored for 15 hours in a thermo-hygrostat under the conditions of 85 % ± 2 % and 85 °C ± 2 °C , and then allowed to stand at room temperature to measure a change in weight over time (water absorbency). The results are shown in Table 1 and FIG. 2.

### 2) Evaluation of glass transition temperature (Tg, °C )

The loss modulus of the polyimide-based film was measured at 330 °C under the conditions of 0.1 % ± 0.005 % strain, 0.05 ± 0.0005 force, and 1 ± 0.01 Hz frequency. The glass transition temperature was measured from a temperature of a peak value of the measured loss modulus, and the results are shown in Table 1 and FIG. 3.

**[Table 1]**

| Index | Water absorbency rate (%) | Glass transition temperature (°C) |
|---|---|---|
| Ex. 1 (LPT 4-1) | 1.26 | 207 |
| Comp. Ex. 1 (Torlon) | 4.01 | 260 |
| Comp. Ex. 2 | 1.24 | 268 |
| Comp. Ex. 3 | 1.18 | 255 |

Referring to Table 1, FIG. 2, and FIG. 3, it was confirmed that the example of the present disclosure has a remarkably low water absorbency rate compared with Torlon of Comparative Example 1, which is conventionally used, so that excellent mechanical properties can be secured when applied to engineering plastics. In addition, it was confirmed that the example according to the present disclosure has excellent moldability by realizing a low glass transition temperature.

In addition, since Comparative Examples 2 and 3 have relatively high contents of fluorine, their water absorbency rate was comparable to that of the example, but the glass transition temperature was high and thus the moldability was remarkably low. Therefore, it was confirmed that the comparative examples are not easily applicable to engineering plastics.

## Claims

1. A polyimide-based copolymer comprising a first repeating unit represented by Chemical Formula 1, a second repeating unit represented by Chemical Formula 2, and a third repeating unit represented by Chemical Formula 3,
wherein a mole ratio of the first repeating unit to the second repeating unit is 1:0.5 to 2: 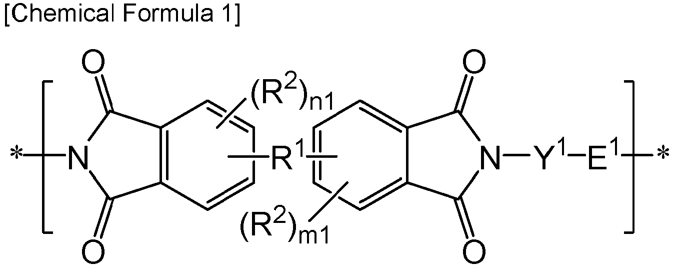 wherein, in Chemical Formula 1,
each R¹ is the same as or different from each other in each repeating unit, and each independently comprises a C6 to C30 divalent aromatic organic group containing at least one -O- linking group, and the aromatic organic group exists alone, or two or more aromatic organic groups are bonded to each other to form a condensed ring, or two or more aromatic organic groups are linked by a single bond, a fluorenylene group, -O-, -S-, -C(=O)-, -CH(OH)-, -S(=O)₂-, - Si(CH₃)₂-, -(CH₂)ₚ- (wherein 1≤p≤10), -(CF₂)_{q}- (wherein 1≤q≤10), -C(CH₃)₂-, - C(CF₃)₂-, or -C(=O)NH-;
each R² is the same as or different from each other in each repeating unit, and each is independently -H, -F, -Cl, -Br, -I, -CF₃, -CCl₃, -CBr₃, -Cl₃, -NO₂, -CN, -COCH₃, -CO₂C₂H₅, a silyl group containing three C1 to C10 aliphatic organic groups, a C1 to C10 aliphatic organic group, or a C6 to C20 aromatic organic group;
n1 and m1 are each independently an integer of 0 to 3;
each Y¹ is the same as or different from each other in each repeating unit, and each is independently a C3 to C10 aliphatic organic group; and
each E¹ is independently a single bond or -NH-, 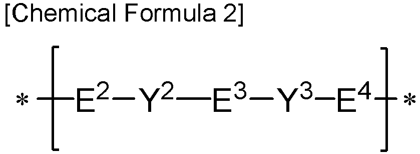 wherein, in Chemical Formula 2,
each Y² is the same as or different from each other in each repeating unit, and each is independently a C6 to C30 divalent aromatic organic group containing at least one trifluoromethyl group (-CF₃), and the aromatic organic group exists alone, or two or more aromatic organic groups are bonded to each other to form a condensed ring, or two or more aromatic organic groups are linked by a single bond, a fluorenylene group, -O-, -S-, -C(=O)-, -CH(OH)-, - S(=O)₂-, -Si(CH₃)₂-, -(CH₂)ₚ- (wherein 1≤p≤10), -(CF₂)_{q}- (wherein 1≤q≤10), - C(CH₃)₂-, -C(CF₃)₂-, or -C(=O)NH-;
E², E³, and E⁴ are independently a single bond or -NH-; and
each Y³ is the same as or different from each other in each repeating unit, and each is independently a divalent linking group derived from at least one compound selected from the group consisting of diacyl halide, dicarboxylic acid, and dicarboxylate in the form of -C(=O)-A-C(=O)-,
wherein A of Y³ is a C6 to C20 divalent aromatic organic group, a C4 to C20 divalent heteroaromatic organic group, or a C6 to C20 divalent alicyclic organic group, and two of -C(=O)- are bonded at a para position with respect to A, 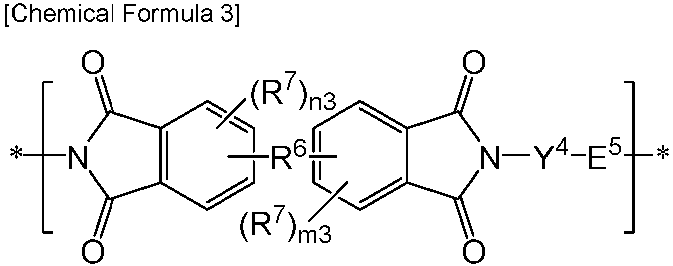 wherein, in Chemical Formula 3,
each R⁶ is the same as or different from each other in each repeating unit, and each independently comprises a C6 to C30 divalent aromatic organic group containing at least one -O- linking group, and the aromatic organic group exists alone, or two or more aromatic organic groups are bonded to each other to form a condensed ring, or two or more aromatic organic groups are linked by a single bond, a fluorenylene group, -O-, -S-, -C(=O)-, -CH(OH)-, -S(=O)₂-, - Si(CH₃)₂-, -(CH₂)ₚ- (wherein 1≤p≤10), -(CF₂)_{q}- (wherein 1≤q≤10), -C(CH₃)₂-, - C(CF₃)₂-, or -C(=O)NH-;
each R⁷ is the same as or different from each other in each repeating unit, and each is independently -H, -F, -Cl, -Br, -I, -CF₃, -CCl₃, -CBr₃, -Cl₃, -NO₂, -CN, -COCH₃, -CO₂C₂H₅, a silyl group containing three C1 to C10 aliphatic organic groups, a C1 to C10 aliphatic organic group, or a C6 to C20 aromatic organic group;
n3 and m3 are each independently an integer of 0 to 3;
each Y⁴ is the same as or different from each other in each repeating unit, and each is independently a C6 to C30 divalent aromatic organic group containing at least one trifluoromethyl group (-CF₃), and the aromatic organic group exists alone, or two or more aromatic organic groups are bonded to each other to form a condensed ring, or two or more aromatic organic groups are linked by a single bond, a fluorenylene group, -O-, -S-, -C(=O)-, -CH(OH)-, - S(=O)₂-, -Si(CH₃)₂-, -(CH₂)ₚ- (wherein 1≤p≤10), -(CF₂)_{q}- (wherein 1≤q≤10), - C(CH₃)₂-, -C(CF₃)₂-, or -C(=O)NH-; and
each E⁵ is independently a single bond or -NH-.

2. The polyimide-based copolymer of Claim 1,
wherein the first repeating unit comprises a repeating unit represented by Chemical Formula 1-1: 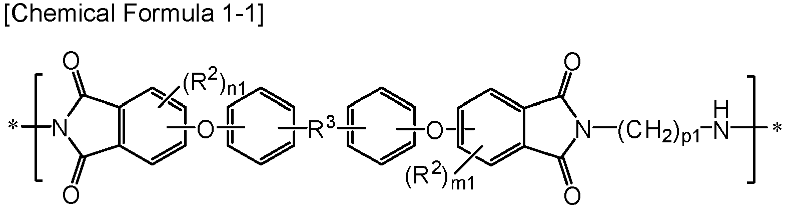 wherein, in Chemical Formula 1-1,
R², n1, and m1 are as defined in Chemical Formula 1.
each R³ is the same as or different from each other in each repeating unit, and each is independently a single bond, a fluorenylene group, -O-, -S-, - C(=O)-, -CH(OH)-, -S(=O)₂-, -Si(CH₃)₂-, -(CH₂)ₚ- (wherein 1≤p≤10), -(CF₂)_{q}-(wherein 1≤q≤10), -C(CH₃)₂-, -C(CF₃)₂-, or -C(=O)NH-; and
p1 is an integer of 3 to 10.

3. The polyimide-based copolymer of Claim 1,
wherein the second repeating unit comprises a repeating unit represented by Chemical Formula 2-1: 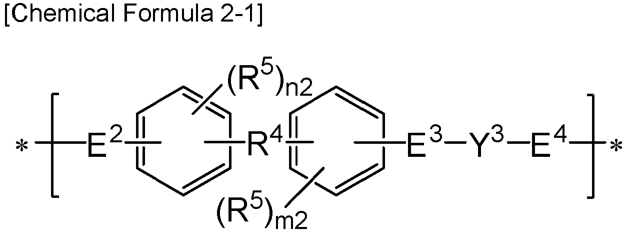 wherein, in Chemical Formula 2-1,
each R⁴ is the same as or different from each other in each repeating unit, and each is independently a single bond, a fluorenylene group, -O-, -S-, - C(=O)-, -CH(OH)-, -S(=O)₂-, -Si(CH₃)₂-, -(CH₂)ₚ- (wherein 1≤p≤10), -(CF₂)_{q}-(wherein 1≤q≤10), -C(CH₃)₂-, -C(CF₃)₂-, or -C(=O)NH-;
each R⁵ is independently -H, -F, -Cl, -Br, -I, -CF₃, -CCl₃, -CBr₃, -Cl₃, - NO₂, -CN, -COCH₃, -CO₂C₂H₅, a silyl group containing three C1 to C10 aliphatic organic groups, a C1 to C10 aliphatic organic group, or a C6 to C20 aromatic organic group;
n2 and m2 are independently an integer of 0 to 5;
E², E³, and E⁴ are independently a single bond or -NH-; and
each Y³ is the same as or different from each other in each repeating unit, and each is independently selected from the group consisting of the following structural formulae:

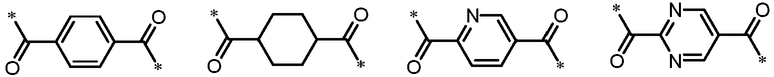

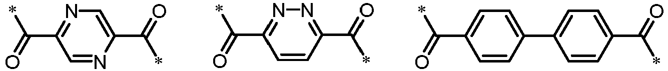

4. The polyimide-based copolymer of Claim 1,
wherein the third repeating unit comprises a repeating unit represented by Chemical Formula 3-1: 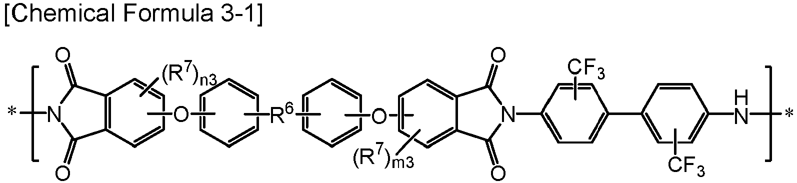 wherein, in Chemical Formula 3-1,
R⁷, n3, and m3 are as defined in Chemical Formula 3, and
each R⁶ is the same as or different from each other in each repeating unit, and each is independently a single bond, a fluorenylene group, -O-, -S-, - C(=O)-, -CH(OH)-, -S(=O)₂-, -Si(CH₃)₂-, -(CH₂)ₚ- (wherein 1≤p≤10), -(CF₂)_{q}-(wherein 1≤q≤10), -C(CH₃)₂-, -C(CF₃)₂-, or -C(=O)NH-.

5. The polyimide-based copolymer of Claim 1,
wherein a mole ratio of the first repeating unit to the second repeating unit to the third repeating unit is 1: 0.5 to 2:1 to 3.

6. The polyimide-based copolymer of Claim 1,
wherein a weight average molecular weight is 90,000 to 150,000 g/mol.

7. A polyimide-based film comprising the polyimide-based copolymer of Claim 1.

8. The polyimide-based film of Claim 7,
which has a water absorbency rate of 0.5 to 2.0 %, measured by a change in weight after storage for 15 hours ± 0.5 hours under the conditions of RH 85 % ± 2 % and 85 °C ± 2 °C.

9. The polyimide-based film of Claim 7,
wherein a glass transition temperature (Tg) is 180 °C to 220 °C.

## Patentansprüche

1. Polyimid-basiertes Copolymer, umfassend eine durch die chemische Formel 1 dargestellte erste Wiederholungseinheit, eine durch die chemische Formel 2 dargestellte zweite Wiederholungseinheit und eine durch die chemische Formel 3 dargestellte dritte Wiederholungseinheit,
wobei ein Molverhältnis der ersten Wiederholungseinheit zu der zweiten Wiederholungseinheit 1:0,5 bis 2 beträgt: 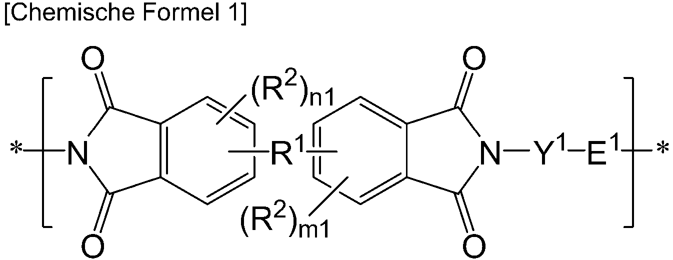 wobei in der chemischen Formel 1
jedes R¹ in jeder Wiederholungseinheit gleich oder verschieden voneinander ist und jeweils unabhängig eine zweiwertige aromatische organische C6 - bis C30 - Gruppe umfasst, die mindestens eine -O-Verknüpfungsgruppe enthält, und die aromatische organische Gruppe alleine existiert, oder zwei oder mehr aromatische organische Gruppen aneinander gebunden sind, um einen kondensierten Ring zu bilden, oder zwei oder mehr aromatische organische Gruppen durch eine Einfachbindung, eine Fluorenylengruppe, -O-, -S-, -C(=O)-, -CH(OH)-, -S(=O)₂-, - Si(CH₃)₂-, -(CH₂)ₚ- (wobei 1≤p≤10), -(CF₂)_{q}- (wobei 1≤q≤10), -C(CH₃)₂-, -C(CF₃)₂- oder -C(=O)NH- verknüpft sind;
jedes R² in jeder Wiederholungseinheit gleich oder verschieden voneinander ist und jeweils unabhängig -H, -F, -Cl, -Br, -I, -CF₃, -CCl₃, -CBr3, -Cl₃, -NO₂, -CN, - COCH₃, -CO₂C₂H₅, eine Silylgruppe, die drei aliphatische organische C1 - bis C10 - Gruppen enthält, eine aliphatische organische C1 - bis C10 -Gruppe oder eine aromatische organische C6 - bis C20 -Gruppe ist;
n1 und m1 jeweils unabhängig eine ganze Zahl von 0 bis 3 sind;
jedes Y¹ in jeder Wiederholungseinheit gleich oder verschieden voneinander ist und jeweils unabhängig eine aliphatische organische C3 - bis C10 -Gruppe ist; und
jedes E¹ unabhängig eine Einfachbindung oder -NH- ist, 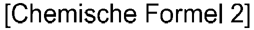 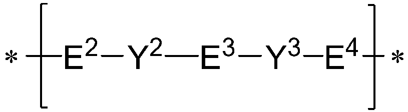
wobei in der chemischen Formel 2
jedes Y² in jeder Wiederholungseinheit gleich oder verschieden voneinander ist und jeweils unabhängig eine zweiwertige aromatische organische C6 - bis C30 - Gruppe ist, die mindestens eine Trifluormethylgruppe (-CF₃) enthält, und die aromatische organische Gruppe alleine existiert, oder zwei oder mehr aromatische organische Gruppen aneinander gebunden sind, um einen kondensierten Ring zu bilden, oder zwei oder mehr aromatische organische Gruppen durch eine Einfachbindung, eine Fluorenylengruppe, -O-, -S-, -C(=O)-, -CH(OH)-, -S(=O)₂-, - Si(CH₃)₂-, -(CH₂)ₚ- (wobei 1≤p≤10), -(CF₂)_{q}- (wobei 1≤q≤10), -C(CH₃)₂-, -C(CF₃)₂- oder -C(=O)NH- verknüpft sind;
E², E³ und E⁴ unabhängig eine Einfachbindung oder -NH- sind; und
jedes Y³ in jeder Wiederholungseinheit gleich oder verschieden voneinander ist und jeweils unabhängig eine zweiwertige Verknüpfungsgruppe ist, die von mindestens einer Verbindung abgeleitet ist, die aus der Gruppe ausgewählt ist, die aus Diacylhalogenid, Dicarbonsäure und Dicarboxylat in der Form von -C(=O)-A-C(=O)-besteht,
wobei A von Y³ eine zweiwertige aromatische organische C6 - bis C20 -Gruppe, eine zweiwertige heteroaromatische organische C4 - bis C20 -Gruppe oder eine zweiwertige alicyclische organische C6 - bis C20 -Gruppe ist und zwei von -C(=O)- an einer para-Position in Bezug auf A verknüpft sind, 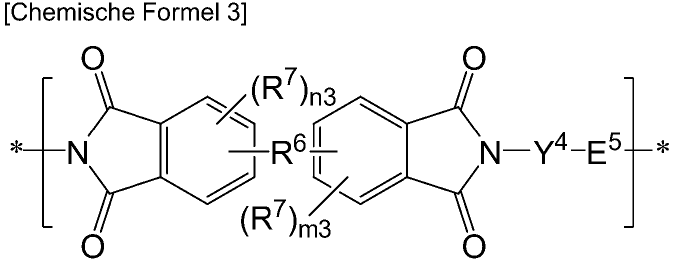 wobei in chemischer Formel 3
jedes R⁶ in jeder Wiederholungseinheit gleich oder verschieden voneinander ist und jeweils unabhängig eine zweiwertige aromatische organische C6 - bis C30 - Gruppe umfasst, die mindestens eine -O-Verknüpfungsgruppe enthält, und die aromatische organische Gruppe alleine existiert, oder zwei oder mehr aromatische organische Gruppen aneinander gebunden sind, um einen kondensierten Ring zu bilden, oder zwei oder mehr aromatische organische Gruppen durch eine Einfachbindung, eine Fluorenylengruppe, -O-, -S-, -C(=O)-, -CH(OH)-, -S(=O)₂-, - Si(CH₃)₂-, -(CH₂)ₚ- (wobei 1≤p≤10), -(CF₂)_{q}- (wobei 1≤q≤10), -C(CH₃)₂-, -C(CF₃)₂- oder -C(=O)NH- verknüpft sind;
jedes R⁷ in jeder Wiederholungseinheit gleich oder verschieden voneinander ist und jeweils unabhängig -H, -F, -Cl, -Br, -I, -CF₃, -CCl₃, -CBr3, -Cl₃, -NO₂, -CN, - COCH₃, -CO₂C₂H₅, eine Silylgruppe, die drei aliphatische organische C1 - bis C10 - Gruppen enthält, eine aliphatische organische C1 - bis C10 -Gruppe oder eine aromatische organische C6 - bis C20 -Gruppe ist;
n3 und m3 jeweils unabhängig eine ganze Zahl von 0 bis 3 sind;
jedes Y⁴ in jeder Wiederholungseinheit gleich oder verschieden voneinander ist und jeweils unabhängig eine zweiwertige aromatische organische C6 - bis C30 - Gruppe ist, die mindestens eine Trifluormethylgruppe (-CF₃) enthält, und die aromatische organische Gruppe alleine existiert, oder zwei oder mehr aromatische organische Gruppen aneinander gebunden sind, um einen kondensierten Ring zu bilden, oder zwei oder mehr aromatische organische Gruppen durch eine Einfachbindung, eine Fluorenylengruppe, -O-, -S-, -C(=O)-, -CH(OH)-, -S(=O)₂-, - Si(CH₃)₂-, -(CH₂)ₚ- (wobei 1≤p≤10), -(CF₂)_{q}- (wobei 1≤q≤10), -C(CH₃)₂-, -C(CF₃)₂- oder -C(=O)NH- verknüpft sind; und
jedes E⁵ unabhängig eine Einfachbindung oder -NH- ist.

2. Polyimid-basiertes Copolymer nach Anspruch 1,
wobei die erste Wiederholungseinheit eine durch die chemische Formel 1-1 dargestellte Wiederholungseinheit umfasst: 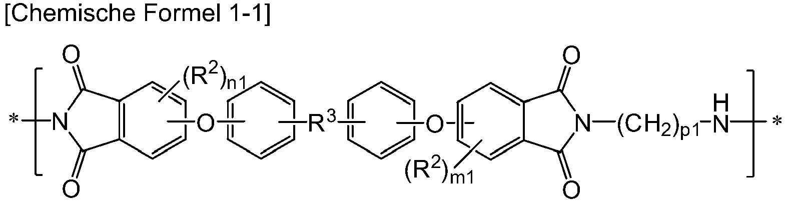 wobei in der chemischen Formel 1-1
R², n1 und m1 wie in der chemischen Formel 1 definiert sind.
jedes R³ in jeder Wiederholungseinheit gleich oder verschieden voneinander ist und jeweils unabhängig eine Einfachbindung, eine Fluorenylengruppe, -O-, -S-, - C(=O)-, -CH(OH)-, -S(=O)₂-, -Si(CH₃)₂-, -(CH₂)ₚ- (wobei 1≤p≤10), -(CF₂)_{q}- (wobei 1≤q≤10), -C(CH₃)₂-, -C(CF₃)₂- oder -C(=O)NH- ist; und
p1 eine ganze Zahl von 3 bis 10 ist.

3. Polyimid-basiertes Copolymer nach Anspruch 1,
wobei die zweite Wiederholungseinheit eine durch die chemische Formel 2-1 dargestellte Wiederholungseinheit umfasst: 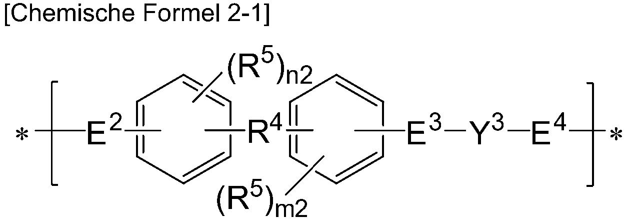 wobei in der chemischen Formel 2-1
jedes R⁴ in jeder Wiederholungseinheit gleich oder verschieden voneinander ist und jeweils unabhängig eine Einfachbindung, eine Fluorenylengruppe, -O-, -S-, - C(=O)-, -CH(OH)-, -S(=O)₂-, -Si(CH₃)₂-, -(CH₂)ₚ- (wobei 1≤p≤10), -(CF₂)_{q}- (wobei 1≤q≤10), -C(CH₃)₂-, -C(CF₃)₂- oder -C(=O)NH- ist;
jedes R⁵ unabhängig -H, -F, -Cl, -Br, -I, -CF₃, -CCl₃, -CBr₃, -Cl₃, -NO₂, -CN, - COCH₃, -CO₂C₂H₅, eine Silylgruppe, die drei aliphatische organische C1 - bis C10 - Gruppen enthält, eine aliphatische organische C1 - bis C10 -Gruppe oder eine aromatische organische C6 - bis C20 -Gruppe ist;
n2 und m2 unabhängig eine ganze Zahl von 0 bis 5 sind;
E², E³ und E⁴ unabhängig eine Einfachbindung oder -NH- sind; und
jedes Y³ in jeder Wiederholungseinheit gleich oder verschieden voneinander ist und jeweils unabhängig aus der Gruppe ausgewählt ist, die aus den folgenden Strukturformeln besteht:

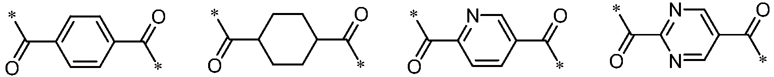

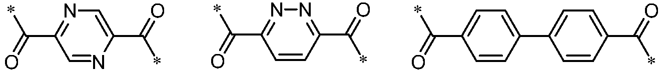

4. Polyimid-basiertes Copolymer nach Anspruch 1,
wobei die dritte Wiederholungseinheit eine durch die chemische Formel 3-1 dargestellte Wiederholungseinheit umfasst: 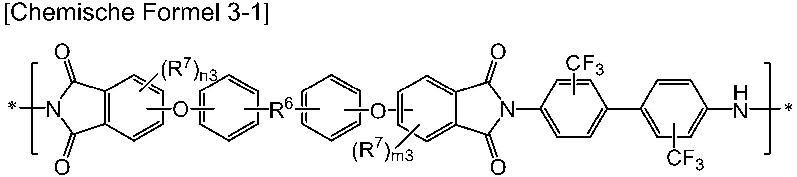 wobei in der chemischen Formel 3-1
R⁷, n3 und m3 wie in der chemischen Formel 3 definiert sind, und
jedes R⁶ in jeder Wiederholungseinheit gleich oder verschieden voneinander ist und jeweils unabhängig eine Einfachbindung, eine Fluorenylengruppe, -O-, -S-, - C(=O)-, -CH(OH)-, -S(=O)₂-, -Si(CH₃)₂-, -(CH₂)ₚ- (wobei 1≤p≤10), -(CF₂)_{q}- (wobei 1≤q≤10), -C(CH₃)₂-, -C(CF₃)₂- oder -C(=O)NH- ist.

5. Polyimid-basiertes Copolymer nach Anspruch 1,
wobei ein Molverhältnis der ersten Wiederholungseinheit zu der zweiten Wiederholungseinheit zu der dritten Wiederholungseinheit 1:0,5 bis 2:1 bis 3 beträgt.

6. Polyimid-basiertes Copolymer nach Anspruch 1,
wobei ein gewichtsmittleres Molekulargewicht 90.000 bis 150.000 g/mol beträgt.

7. Polyimid-basierter Film, umfassend das Polyimid-basierte Copolymer nach Anspruch 1.

8. Polyimid-basierter Film nach Anspruch 7,
der eine Wasserabsorptionsrate von 0,5 bis 2,0 % aufweist, gemessen durch eine Gewichtsänderung nach Lagerung für 15 Stunden ± 0,5 Stunden unter den Bedingungen von RH 85 % ± 2 % und 85 °C ± 2 °C.

9. Polyimid-basierter Film nach Anspruch 7,
wobei eine Glasübergangstemperatur (Tg) 180 °C bis 220 °C beträgt.

## Revendications

1. Copolymère à base de polyimide comprenant une première unité de répétition représentée par la Formule chimique 1, une deuxième unité de répétition représentée par la Formule chimique 2 et une troisième unité de répétition représentée par la Formule chimique 3,
dans lequel un rapport molaire de la première unité de répétition à la deuxième unité de répétition est 1:0,5 à 2 : 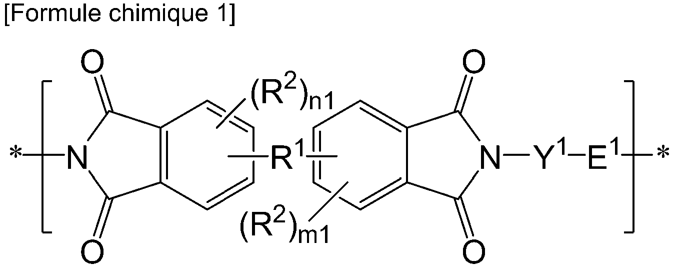 dans lequel, dans la Formule chimique 1,
chaque R¹ est identique ou différent l'un de l'autre dans chaque unité de répétition, et chacun comprend indépendamment un groupe organique aromatique divalent en C6 à C30 contenant un ou plusieurs groupes de liaison - O-, et le groupe organique aromatique existe seul, ou deux ou plus de deux groupes organiques aromatiques sont liés les uns aux autres pour former un cycle condensé, ou deux ou plus de deux groupes organiques aromatiques sont liés par une seule liaison, un groupe fluorénylène, -O-, -S-, -C(=O)-, -CH(OH)-, - S(=O)₂-, -Si(CH₃)₂-, -(CH₂)ₚ- (dans lequel 1≤p≤10), -(CF₂)_{q}- (dans lequel 1≤q≤10), -C(CH₃)₂-, -C(CF₃)₂- ou -C(=O)NH- ;
chaque R² est identique ou différent l'un de l'autre dans chaque unité de répétition, et chacun est indépendamment -H, -F, -CI, -Br, -I, -CF₃, -CCl₃, -CBr₃, -Cl₃, -NO₂, -CN, -COCH₃, -CO₂C₂H₅, un groupe silyle contenant trois groupes organiques aliphatiques en C1 à C10, un groupe organique aliphatique en C1 à C10 ou un groupe organique aromatique en C6 à C20 ;
n1 et m1 sont chacun indépendamment un nombre entier de 0 à 3 ; chaque Y¹ est identique ou différent l'un de l'autre dans chaque unité de répétition, et chacun est indépendamment un groupe organique aliphatique en C3 à C10 ; et
chaque E¹ est indépendamment une seule liaison ou -NH-, 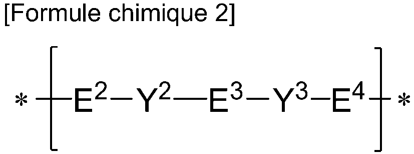 dans lequel, dans la Formule chimique 2,
chaque Y² est identique ou différent l'un de l'autre dans chaque unité de répétition, et chacun est indépendamment un groupe organique aromatique divalent en C6 à C30 contenant un ou plusieurs groupes trifluorométhyle (-CF₃), et le groupe organique aromatique existe seul, ou deux ou plus de deux groupes organiques aromatiques sont liés les uns aux autres pour former un cycle condensé, ou deux ou plus de deux groupes organiques aromatiques sont liés par une seule liaison, un groupe fluorénylène, -O-, -S-, -C(=O)-, -CH(OH)-, - S(=O)₂-, -Si(CH₃)₂-, -(CH₂)ₚ- (dans lequel 1≤p≤10), -(CF₂)_{q}- (dans lequel 1≤q≤10), -C(CH₃)₂-, -C(CF₃)₂- ou -C(=O)NH- ;
E², E³ et E⁴ sont indépendamment une seule liaison ou -NH- ; et chaque Y³ est identique ou différent l'un de l'autre dans chaque unité de répétition, et chacun est indépendamment un groupe de liaison divalent dérivé d'un ou plusieurs composés sélectionnés dans le groupe constitué de d'halogénure de diacyle, acide dicarboxylique et dicarboxylate sous la forme de -C(=O)-A-C(=O)-,
dans lequel A de Y³ est un groupe organique aromatique divalent en C6 à C20, un groupe organique hétéroaromatique divalent en C4 à C20, ou un groupe organique alicyclique divalent en C6 à C20, et deux des -C(=O)- sont liés à une position para par rapport à A, 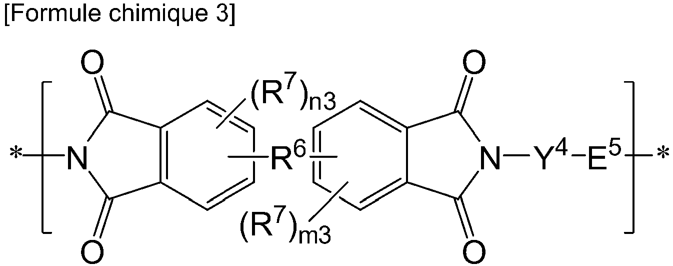 dans lequel, dans la Formule chimique 3,
chaque R⁶ est identique ou différent l'un de l'autre dans chaque unité de répétition, et chacun comprend indépendamment un groupe organique aromatique divalent en C6 à C30 contenant un ou plusieurs groupes de liaison - O-, et le groupe organique aromatique existe seul, deux ou plus de deux groupes organiques aromatiques sont liés les uns aux autres pour former un cycle condensé, ou deux ou plus de deux groupes organiques aromatiques sont liés par une seule liaison, un groupe fluorénylène, -O-, -S-, -C(=O)-, -CH(OH)-, - S(=O)₂-, -Si(CH₃)₂-, -(CH₂)ₚ- (dans lequel 1≤p≤10), -(CF₂)_{q}- (dans lequel 1≤q≤10), -C(CH₃)₂-, -C(CF₃)₂- ou -C(=O)NH- ;
chaque R⁷ est identique ou différent l'un de l'autre dans chaque unité de répétition, et chacun est indépendamment -H, -F, -CI, -Br, -I, -CF₃, -CCl₃, -CBr₃, -Cl₃, -NO₂, -CN, -COCH₃, -CO₂C₂H₅, un groupe silyle contenant trois groupes organiques aliphatiques en C1 à C10, un groupe organique aliphatique en C1 à C10 ou un groupe organique aromatique en C6 à C20 ;
n3 et m3 sont chacun indépendamment un nombre entier de 0 à 3 ; chaque Y⁴ est identique ou différent l'un de l'autre dans chaque unité de répétition, et chacun est indépendamment un groupe organique aromatique divalent en C6 à C30 contenant un ou plusieurs groupes trifluorométhyle (-CF₃), et le groupe organique aromatique existe seul, ou deux ou plus de deux groupes organiques aromatiques sont liés les uns aux autres pour former un cycle condensé, ou deux ou plus de deux groupes organiques aromatiques sont liés par une seule liaison, un groupe fluorénylène, -O-, -S-, -C(=O)-, -CH(OH)-, - S(=O)₂-, -Si(CH₃)₂-, -(CH₂)ₚ- (dans lequel 1≤p≤10), -(CF₂)_{q}- (dans lequel 1≤q≤10), -C(CH₃)₂-, -C(CF₃)₂- ou -C(=O)NH- ; et
chaque E⁵ est indépendamment une seule liaison ou -NH-.

2. Copolymère à base de polyimide selon la revendication 1,
dans lequel la première unité de répétition comprend une unité de répétition représentée par la Formule chimique 1-1 : 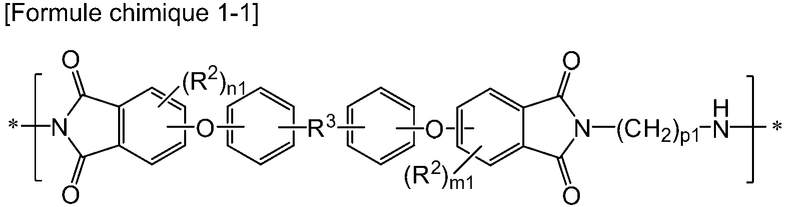 dans lequel, dans la Formule chimique 1-1,
R², n1 et m1 sont tels que définis dans la Formule chimique 1.
chaque R³ est identique ou différent l'un de l'autre dans chaque unité de répétition, et chacun est indépendamment une seule liaison, un groupe fluorénylène, -O-, -S-, -C(=O)-, -CH(OH)-, -S(=O)₂-, -Si(CH₃)₂-, -(CH₂)ₚ- (dans lequel 1≤p≤10), -(CF₂)_{q}- (dans lequel 1≤q≤10), -C(CH₃)₂-, -C(CF₃)₂- ou - C(=O)NH- ; et
p1 est un nombre entier de 3 à 10.

3. Copolymère à base de polyimide selon la revendication 1,
dans lequel la deuxième unité de répétition comprend une unité de répétition représentée par la Formule chimique 2-1 : 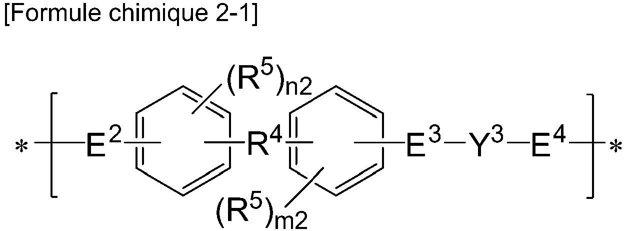 dans lequel, dans la Formule chimique 2-1,
chaque R⁴ est identique ou différent l'un de l'autre dans chaque unité de répétition, et chacun est indépendamment une seule liaison, un groupe fluorénylène, -O-, -S-, -C(=O)-, -CH(OH)-, -S(=O)₂-, -Si(CH₃)₂-, -(CH₂)ₚ- (dans lequel 1≤p≤10), -(CF₂)_{q}- (dans lequel 1≤q≤10), -C(CH₃)₂-, -C(CF₃)₂-, ou - C(=O)NH- ;
chaque R⁵ est indépendamment -H, -F, -CI, -Br, -I, -CF₃, -CCl₃, -CBr₃, - Cl₃, -NO₂, -CN, -COCH₃, -CO₂C₂H₅, un groupe silyle contenant trois groupes organiques aliphatiques en C1 à C10, un groupe organique aliphatique en C1 à C10 ou un groupe organique aromatique en C6 à C20 ;
n2 et m2 sont indépendamment un nombre entier de 0 à 5 ;
E², E³ et E⁴ sont indépendamment une seule liaison ou -NH- ; et chaque Y³ est identique ou différent l'un de l'autre dans chaque unité de répétition, et chacun est sélectionné indépendamment dans le groupe constitué des formules structurelles ci-après :

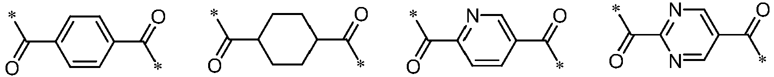

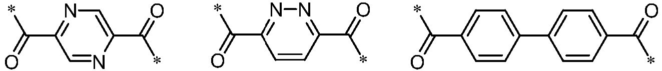

4. Copolymère à base de polyimide selon la revendication 1,
dans lequel la troisième unité de répétition comprend une unité de répétition représentée par la Formule chimique 3-1 : 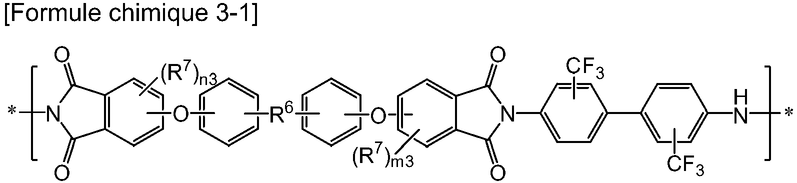 dans lequel, dans la Formule chimique 3-1,
R⁷, n3 et m3 sont tels que définis dans la Formule chimique 3, et
chaque R⁶ est identique ou différent l'un de l'autre dans chaque unité de répétition, et chacun est indépendamment une seule liaison, un groupe fluorénylène, -O-, -S-, -C(=O)-, -CH(OH)-, -S(=O)₂-, -Si(CH₃)₂-, -(CH₂)ₚ- (dans lequel 1≤p≤10), -(CF₂)_{q}- (dans lequel 1≤q≤10), -C(CH₃)₂-, -C(CF₃)₂- ou - C(=O)NH-.

5. Copolymère à base de polyimide selon la revendication 1,
dans lequel un rapport molaire de la première unité de répétition à la deuxième unité de répétition à la troisième unité de répétition est 1:0,5 à 2:1 à 3.

6. Copolymère à base de polyimide selon la revendication 1,
dans lequel un poids moléculaire moyen en poids est 90 000 à 150 000 g/mol.

7. Film à base de polyimide comprenant le copolymère à base de polyimide selon la revendication 1.

8. Film à base de polyimide selon la revendication 7,
lequel a un taux d'absorption d'eau de 0,5 à 2,0 %, mesuré par un changement de poids après stockage pendant 15 heures ± 0,5 heure dans les conditions de **HR** de 85 % ± 2 % et 85°C ± 2°C.

9. Film à base de polyimide selon la revendication 7,
dans lequel une température de transition vitreuse (Tg) est 180°C à 220°C.
